# EUROPÄISCHE PATENTANMELDUNG

(11) **EP 3 318 342 A1**
(43) Veröffentlichungstag der Anmeldung: **09.05.2018**
(21) Anmeldenummer: 16197488.6
(22) Anmeldetag: 07.11.2016
(51) Int. Cl.: B21B 1/46, B22D 11/14, B22D 11/16

(54) **VERFAHREN ZUM BETREIBEN EINER GIESSWALZVERBUNDANLAGE**

(71) Anmelder: Primetals Technologies Austria GmbH, 4031 Linz (AT)
(72) Erfinder: Lengauer, Thomas, 4616 Weißkirchen a.d. Traun (AT)
(74) Vertreter: Metals@Linz

(57) **Zusammenfassung**

Die Erfindung betrifft ein Verfahren zum Betreiben einer Gießwalzverbundanlage (2), bei dem mithilfe einer Gießmaschine (4) der Gießwalzverbundanlage (2) ein Gießprodukt erzeugt wird und mithilfe einer Walzstraße (6, 8) der Gießwalzverbundanlage (2) aus dem Gießprodukt ein Walzprodukt erzeugt wird, wobei die Gießwalzverbundanlage (2) eine Regeleinrichtung (12) mit einer Messeinheit (14) sowie einem Regler (16) aufweist und von der Messeinheit (14) eine Walzprodukteigenschaft erfasst, ein von der Walzprodukteigenschaft abhängiges Messsignal erzeugt und das Messsignal an den Regler (16) übermittelt wird.

Um die Erzeugung eines Walzprodukts mit einer hohen Walzproduktqualität zu ermöglichen, wird vorgeschlagen, dass vom Regler (16) anhand eines Regelalgorithmus unter Verwendung des Messsignals ein Steuersignal für die Gießmaschine (4) erzeugt und das Steuersignal an die Gießmaschine (4) übermittelt wird und von der Gießmaschine (4) unter Verwendung des Steuersignals ein Gießparameter eingestellt wird.

## Beschreibung

Die Erfindung betrifft ein Verfahren zum Betreiben einer Gießwalzverbundanlage. Des Weiteren betrifft die Erfindung eine Gießwalzverbundanlage sowie eine Regeleinrichtung für eine Gießwalzverbundanlage.

Bei einer Gießwalzverbundanlage handelt es sich um eine Anlage, die eine Gießmaschine sowie mindestens eine Walzstraße umfasst. Mithilfe der Gießmaschine wird ein Gießprodukt erzeugt und mithilfe der Walzstraße wird aus dem Gießprodukt ein Walzprodukt erzeugt.

Anlagenbetreiber von Gießwalzverbundanlagen sind oftmals darum bemüht, Walzprodukte mit einer hohen Walzproduktqualität herzustellen. Eine hohe Walzproduktqualität kann beispielsweise bedeuten, dass das Walzprodukt hinsichtlich seiner Material-/Oberflächeneigenschaften eine hohe Homogenität aufweist und/oder ein geometrisches Profil aufweist, welches lediglich geringfügig von einem geometrischen Sollprofil des Walzprodukts abweicht.

In der Patentanmeldung KR20150073414A ist eine Gießwalzverbundanlage zur Herstellung eines Walzprodukts offenbart, die zusätzlich zu einer Gießmaschine, einer Grobwalzstraße und einer Fertigwalzstraße auch noch eine Messeinheit sowie eine Kontrolleinheit aufweist. Die Messeinheit misst eine Walzprodukteigenschaft in der Fertigwalzstraße. Die Kontrolleinheit wiederum erzeugt auf Basis der gemessenen Walzprodukteigenschaft ein Steuersignal, mittels welchem die Grobwalzstraße derart gesteuert wird, dass eine Dicke des Walzprodukts an einen Dickensollwert angepasst wird.

Eine Aufgabe der Erfindung ist es, ein Verfahren zum Betreiben einer Gießwalzverbundanlage anzugeben, welches die Erzeugung eines Walzprodukts mit einer hohen Walzproduktqualität ermöglicht.

Diese Aufgabe wird erfindungsgemäß gelöst durch ein Verfahren mit den Merkmalen des Anspruchs 1.

Eine weitere Aufgabe der Erfindung ist es, eine Regeleinrichtung für eine Gießwalzverbundanlage bereitzustellen, um der Gießwalzverbundanlage die Durchführung des Verfahrens zu ermöglichen.

Diese Aufgabe wird erfindungsgemäß gelöst durch eine Regeleinrichtung mit den Merkmalen des Anspruchs 11.

Noch eine weitere Aufgabe der Erfindung ist es, eine Gießwalzverbundanlage bereitzustellen, welche die Erzeugung eines Walzprodukts mit einer hohen Walzproduktqualität ermöglicht.

Diese Aufgabe wird erfindungsgemäß gelöst durch eine Gießwalzverbundanlage mit den Merkmalen des Anspruchs 12.

Beim erfindungsgemäßen Verfahren wird mithilfe einer Gießmaschine der Gießwalzverbundanlage ein Gießprodukt erzeugt und mithilfe einer Walzstraße der Gießwalzverbundanlage aus dem Gießprodukt ein Walzprodukt erzeugt. Weiter ist beim erfindungsgemäßen Verfahren vorgesehen, dass die Gießwalzverbundanlage eine Regeleinrichtung mit einer Messeinheit sowie einem Regler aufweist. Ferner ist bei dem Verfahren vorgesehen, dass von der Messeinheit eine Walzprodukteigenschaft erfasst, ein von der Walzprodukteigenschaft abhängiges Messsignal erzeugt und das Messsignal an den Regler übermittelt wird. Außerdem wird vom Regler anhand eines Regelalgorithmus unter Verwendung des Messsignals ein Steuersignal für die Gießmaschine erzeugt und das Steuersignal an die Gießmaschine übermittelt. Des Weiteren wird von der Gießmaschine unter Verwendung des Steuersignals ein Gießparameter eingestellt.

Die erfindungsgemäße Regeleinrichtung weist eine Messeinheit sowie einen mit einer Gießmaschine verbindbaren Regler auf. Die Messeinheit ist dazu eingerichtet, eine Walzprodukteigenschaft zu erfassen, ein von der Walzprodukteigenschaft abhängiges Messsignal zu erzeugen und das Messsignal an den Regler zu übermitteln. Außerdem ist der Regler dazu eingerichtet, anhand eines Regelalgorithmus unter Verwendung des Messsignals ein Steuersignal für die Gießmaschine zu erzeugen.

Die erfindungsgemäße Gießwalzverbundanlage weist eine Gießmaschine zum Erzeugen eines Gießprodukts und eine Walzstraße zum Erzeugen eines Walzprodukts aus dem Gießprodukt auf. Zudem weist die erfindungsgemäße Gießwalzverbundanlage die erfindungsgemäße Regeleinrichtung auf, wobei deren Regler mit der Gießmaschine der Gießwalzverbundanlage verbunden ist und wobei die Gießmaschine dazu eingerichtet ist, unter Verwendung des von dem Regler bereitgestellten Steuersignals einen Gießparameter einzustellen.

Vorteilhafte Weiterbildungen sind Gegenstand abhängiger Patentansprüche sowie der nachfolgenden Beschreibung und können sich sowohl auf das Verfahren als auch auf die Regeleinrichtung und die Gießwalzverbundanlage beziehen.

Die Erfindung beruht auf der Erkenntnis, dass diverse Walzprodukteigenschaften eines mithilfe einer Gießwalzverbundanlage erzeugten Walzprodukts eine Funktion von Gießparametern der Gießwalzverbundanlage sind. Das heißt, durch eine Veränderung eines Gießparameters können eine oder mehrere Walzprodukteigenschaften und somit die Walzproduktqualität beeinflusst werden.

Bisher werden Gießparameter einer Gießwalzverbundanlage, die auf das Erreichen bestimmter Walzprodukteigenschaften abzielen, nach Erfahrungswerten eingestellt, sodass es maßgeblich vom Know-how eines Anlagenbetreibers abhängt, ob eine hohe Walzproduktqualität erreicht wird.

Die Erfindung hingegen ermöglicht es einem Anlagenbetreiber, ohne großen Know-how-Aufwand und ohne großen Geräteaufwand, ein Walzprodukt mit einer hohen Walzproduktqualität zu erzeugen und die Walzproduktqualität dauerhaft auf einem hohen Niveau zu halten.

Bei der Erfindung beruht der Wert, auf den der Gießparameter eingestellt wird, nicht auf einem Erfahrungswert des Anlagenbetreibers, sondern auf dem Steuersignal bzw. dessen Informationsinhalt. Da das Steuersignal unter Verwendung des Messsignals erzeugt wird und das Messsignal von der mittels der Messeinheit erfassten Walzprodukteigenschaft abhängig ist, weist letztlich auch das Steuersignal eine Abhängigkeit von der erfassten Walzprodukteigenschaft auf. Anschaulich gesprochen, sieht die Erfindung eine Regelschleife vor, bei welcher eine Rückführung der erfassten Walzprodukteigenschaft zu der Gießmaschine erfolgt und der Gießparameter automatisiert eingestellt wird. Der Anlagenbetreiber muss dabei nicht wissen, wie die Abhängigkeit zwischen dem Gießparameter und der erfassten Walzprodukteigenschaft aussieht.

Ein Vorteil der Erfindung gegenüber der Lehre der oben genannten Patentanmeldung KR20150073414A ist, dass durch eine Beeinflussung des Gießparameters - im Vergleich zur einer Beeinflussung eines Walzparameters einer Grobwalzstraße - nicht nur geometrische Eigenschaften des Walzprodukts, sondern auch dessen Materialeigenschaften beeinflusst werden können. Zudem ist es möglich, durch eine Beeinflussung des Gießparameters geometrische Eigenschaften des Walzprodukts zu beeinflussen, die durch eine Beeinflussung eines Walzparameters einer Grobwalzstraße nicht oder nur in geringerem Maße beeinflusst werden können. Beispielsweise kann der Gießparameter derart eingestellt werden, dass die Breite des Walzprodukts in solchem Maße seiner Sollbreite entspricht, dass ein Besäumschnitt des Walzprodukts entfallen kann, oder nur geringe Ausbringungsverluste auftreten.

Als Gießparameter ist vorliegend ein Betriebsparameter der Gießmaschine zu verstehen. Das Einstellen des Gießparameters umfasst zweckmäßigerweise ein Verändern des Gießparameters.

Die Regeleinrichtung kann beispielsweise für eine Neuanlage verwendet werden. Alternativ kann eine bestehende Gießwalzverbundanlage mit der Regeleinrichtung nachgerüstet werden.

Es ist vorteilhaft, wenn die Gießmaschine mit einer Signalübertragungsschnittstelle ausgestattet ist, über welche die Gießmaschine mit dem Regler verbindbar ist. Insbesondere kann die Gießmaschine mittels einer Kabel- oder Funkverbindung mit dem Regler verbunden sein.

Vorzugsweise liegt der Regelalgorithmus in Form eines maschinenlesbaren Programmcodes vor. Der Regelalgorithmus kann zumindest teilweise auf empirisch ermittelten Abhängigkeiten zwischen einer oder mehreren Walzprodukteigenschaften und einem oder mehreren Gießparametern basieren.

Vorteilhafterweise umfasst der Regler einen Datenspeicher sowie einen Prozessor. Der Regelalgorithmus ist zweckmäßigerweise in dem Datenspeicher hinterlegt und vom Prozessor ausführbar. Vorzugsweise ist der Regler mit einer Signalübertragungsschnittstelle ausgestattet, über welche der Regler mit der Gießmaschine verbindbar ist.

Des Weiteren kann die Walzstraße ein oder mehrere Walzgerüste umfassen. Bei dem jeweiligen Walzgerüst kann es sich beispielsweise um ein Duo-Gerüst (Zweiwalzengerüst) oder ein Quarto-Gerüst (Vierwalzengerüst) handeln.

Zweckmäßigerweise umfasst die Gießmaschine eine Kokille mit zwei Schmalseitenplatten, deren Abstand zueinander verstellbar ist, sowie zwei Breitseitenplatten. Die Kokille kann insbesondere eine sogenannte Bogenkokille oder eine sogenannte Senkrechtkokille sein. Vorteilhafterweise ist die Kokille mit einer Primärkühleinrichtung zur Kühlung ihrer Platten ausgestattet. Die Primärkühlung kann beispielsweise ein durch die Platten der Kokille zirkulierendes Kühlmittel, insbesondere Wasser, zum Kühlen der Platten nutzen.

Darüber hinaus umfasst die Gießmaschine zweckmäßigerweise ein Führungssystem zum Führen des Gießprodukts. Das Führungssystem ist vorteilhafterweise mit einer Sekundärkühleinrichtung zum Kühlen des Gießprodukts ausgestattet. Beispielsweise kann die Sekundärkühleinrichtung mehrere Kühlmitteldüsen zum Aufsprühen eines Kühlmittels auf das Gießprodukt aufweisen.

Die Messeinheit kann ein oder mehrere Messgeräte umfassen. Insbesondere kann die Messeinheit mehrere unterschiedliche Messgeräte zum Erfassen unterschiedlicher Walzprodukteigenschaften umfassen. Das jeweilige Messgerät der Messeinheit kann beispielsweise ein berührungslos messendes Messgerät sein, welches einer Walzprodukteigenschaft insbesondere durch Detektion von Strahlung erfassen kann.

Zweckmäßigerweise ist die Messeinheit mit einer Signalübertragungsschnittstelle ausgestattet, über welche die Messeinheit mit dem Regler verbindbar ist. Weiter ist es zweckmäßig, wenn die Messeinheit mit dem Regler verbunden ist, insbesondere mittels einer Kabel- oder einer Funkverbindung.

In bevorzugter Weise ist das mithilfe der Gießmaschine erzeugte Gießprodukt ein Metallstrang, insbesondere ein Stahlstrang. Die Gießmaschine ist also vorzugsweise eine Stranggießmaschine.

Weiter ist es bevorzugt, wenn das mithilfe der Walzstraße erzeugte Walzprodukt ein Metallband, insbesondere ein Stahlband, ist.

Die Gießwalzverbundanlage kann bevorzugt eine endlos operierende Gießwalzverbundanlage sein, in der ein von der Gießmaschine endlos produziertes Gießprodukt ungeschnitten in zumindest einer Walzstraße (z.B. einer Grob- und einer Fertigwalzstraße) zu einem endlos vorliegenden Walzprodukt (auch Endlosprodukt genannt) gewalzt wird. Das Endlosprodukt ist insbesondere ein Endlosmetallband, bevorzugt aus Stahl.

Alternativ kann die Gießwalzverbundanlage eine diskontinuierlich (z.B. im sog. Batch-, Coil-to-Coil- oder Semi-Endlos-Betrieb) operierende Gießwalzverbundanlage sein.

In einer bevorzugten Ausführung der Erfindung wird das Walzprodukt mithilfe eines Warmwalzprozesses erzeugt. Mit anderen Worten, in der Walzstraße wird das Gießprodukt oder ein aus dem Gießprodukt erzeugtes Zwischenprodukt einem Warmwalzprozess unterzogen. Auf diese Weise kann das zu verarbeitende Material mit geringer Kraft umgeformt werden. Als Warmwalzprozess ist ein Walzprozess zu verstehen, bei dem das zu verarbeitende Material eine Temperatur oberhalb seiner Rekristallisationstemperatur aufweist. Zum Erwärmen des Gießprodukts oder eines aus dem Gießprodukt erzeugten Zwischenprodukts kann die Gießwalzverbundanlage zum Beispiel eine Heizeinrichtung, insbesondere eine induktive Heizeinrichtung, aufweisen.

Der Gießparameter, der von der Gießmaschine unter Verwendung des Steuersignals eingestellt wird, kann zum Beispiel eine Gießbreite, eine Gießgeschwindigkeit oder ein Kühlparameter der Gießmaschine sein. Als Gießbreite ist ein Abstand zwischen den Schmalseitenplatten der Kokille an ihrem Ausgang zu verstehen. Besagter Kühlparameter kann beispielsweise eine Kühlleistung (z.B. die Menge oder der Druck des Kühlmediums) der zuvor erwähnten Primärkühleinrichtung oder der zuvor erwähnten Sekundärkühleinrichtung sein. Insbesondere kann der Kühlparameter ein Profil einer Kühlleistung der Primär- oder Sekundärkühleinrichtung über die Länge und/oder über die Breite des Gießprodukts sein. Dadurch kann z.B. ein in der Breitenrichtung des Walzprodukts vorliegender heißer Bereich bzw. eine heiße Zone eliminiert werden, in dem eine Kühldüse in der Sekundärkühleinrichtung der Gießmaschine positioniert wird, sodass die heiße Zone verschwindet.

Durch ein Verstellen der Gießbreite kann insbesondere die Breite des Walzprodukts verändert werden. Ein Verstellen der Gießgeschwindigkeit und/oder eines Kühlparameters der Gießmaschine wiederum kann beispielsweise ein geometrisches Profil, ein Temperaturprofil und/oder eine Material-/Oberflächeneigenschaft des Walzprodukts verändern.

Die Walzprodukteigenschaft, die von der Messeinheit erfasst wird, kann beispielsweise eine geometrische Eigenschaft, eine Materialeigenschaft oder eine Temperaturgröße des Walzprodukts sein.

Bei der geometrischen Eigenschaft kann es sich zum Beispiel um die Breite des Walzprodukts, dessen Planheit oder ein geometrisches Profil des Walzprodukts, insbesondere ein Dickenprofil über die Breite des Walzprodukts, handeln. Ferner kann die Temperaturgröße des Walzprodukts ein einzelner Temperaturwert oder ein Temperaturprofil, zum Beispiel über die Breite des Walzprodukts, sein. Die Materialeigenschaft kann insbesondere eine Oberflächeneigenschaft des Walzprodukts sein. Zum Beispiel kann es sich bei der Materialeigenschaft um eine Verteilung von Zunderfehlern oder eine Gefügeverteilung, insbesondere über die Breite des Walzprodukts, handeln.

Zweckmäßigerweise wird von der Messeinheit die Walzprodukteigenschaft, bezogen auf eine Laufrichtung des Walzprodukts in der Gießwalzverbundanlage, hinter der Walzstraße erfasst.

Das Walzprodukt kann mithilfe der Walzstraße direkt aus dem Gießprodukt erzeugt werden. Das heißt, das Gießprodukt kann nach dessen Herstellung der Walzstraße zur Durchführung eines Walzprozesses zugeführt werden, ohne zuvor einem Umformverfahren unterzogen zu werden. In diesem Fall kann die Walzstraße insbesondere eine Fertigwalzstraße sein.

Alternativ kann aus dem Gießprodukt zunächst durch ein Umformverfahren, beispielsweise durch einen Walzprozess, ein Zwischenprodukt, insbesondere ein Grobwalzprodukt, erzeugt werden. Das Zwischenprodukt kann dann der Walzstraße zur Durchführung des Walzprozesses zugeführt werden.

In einer vorteilhaften Ausgestaltung der Erfindung ist die Walzstraße eine Grobwalzstraße, auch Vor- oder Zwischenwalzstraße genannt. Zweckmäßigerweise erzeugt die Walzstraße in diesem Fall aus dem Gießprodukt ein Grobwalzprodukt. Darüber hinaus kann die Gießwalzverbundanlage eine weitere Walzstraße, insbesondere eine Fertigwalzstraße, aufweisen. Die weitere Walzstraße kann insbesondere aus dem Grobwalzprodukt ein Fertigwalzprodukt erzeugen. Weiter kann von der Messeinheit die Walzprodukteigenschaft zwischen diesen beiden Walzstraßen erfasst werden.

Vorzugsweise handelt es sich bei der erstgenannten Walzstraße und/oder bei der weiteren Walzstraße jeweils um eine Warmwalzstraße.

Bei einer vorteilhaften Weiterbildung der Erfindung ist vorgesehen, dass dem Regler ein Sollwert der Walzprodukteigenschaft zugeführt wird. Das vom Regler erzeugte Steuersignal ist vorzugsweise von einer Abweichung zwischen dem Sollwert der Walzprodukteigenschaft und deren Istwert abhängig. Zweckmäßigerweise wird der Istwert der Walzprodukteigenschaft vom Regler unter Verwendung des Messsignals ermittelt.

Vorteilhafterweise beschreibt der Regelalgorithmus eine Strategie, wie der Gießparameter in Abhängigkeit der Abweichung zwischen dem Sollwert und dem Istwert der Walzprodukteigenschaft einzustellen ist - mit dem Ziel, den Istwert an den Sollwert anzunähern.

Ferner ist es bevorzugt, wenn die Gießwalzverbundanlage eine Bedieneinheit, zum Beispiel einen Computer, aufweist. Zweckmäßigerweise ist die Bedieneinheit mit dem Regler verbunden, insbesondere mittels einer Kabel- oder einer Funkverbindung.

Vorteilhafterweise ist mittels der Bedieneinheit dem Regler ein Sollwert der Walzprodukteigenschaft vorgebbar.

Grundsätzlich können von der Messeinheit mehrere unterschiedliche Walzprodukteigenschaften, insbesondere mehrere der zuvor erwähnten Walzprodukteigenschaften, erfasst werden. Die Messeinheit kann beispielsweise zu jeder der erfassten Walzprodukteigenschaften ein Messsignal erzeugen, welches von der jeweiligen Walzprodukteigenschaft abhängig ist, und das jeweilige Messsignal an den Regler übermitteln.

Weiter kann vorgesehen sein, dass von der Gießmaschine mehrere unterschiedliche Gießparameter, insbesondere mehrere der zuvor erwähnten Gießparameter, eingestellt werden. Für jeden einzustellenden Gießparameter kann der Regler ein eigenes Steuersignal für die Gießmaschine erzeugen und dieses an die Gießmaschine übermitteln.

Die bisher gegebene Beschreibung vorteilhafter Ausgestaltungen der Erfindungen enthält zahlreiche Merkmale, die in den einzelnen abhängigen Patentansprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren, der erfindungsgemäßen Regeleinrichtung und der erfindungsgemäßen Gießwalzverbundanlage kombinierbar. Ferner können Verfahrensmerkmale auch als Eigenschaft der entsprechenden Vorrichtungseinheit gesehen werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

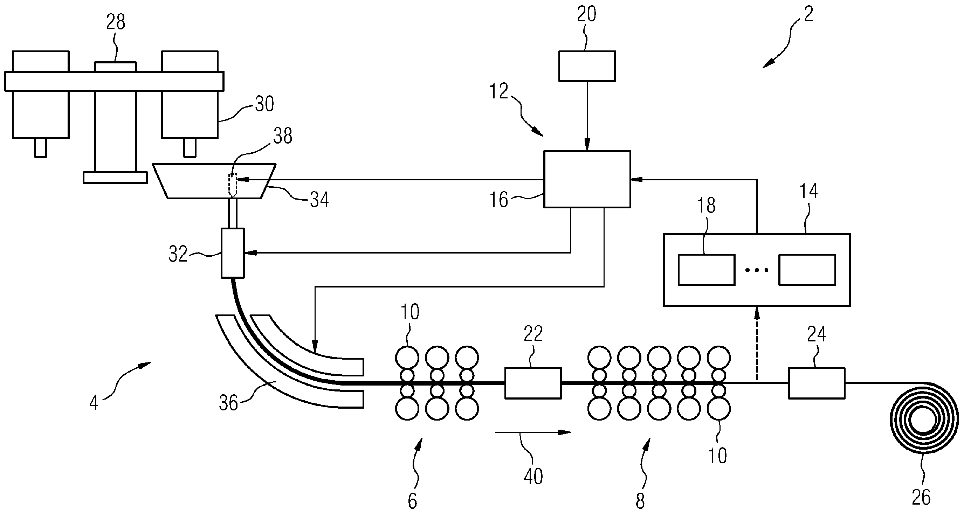

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung des Ausführungsbeispiels der Erfindung, das im Zusammenhang mit der Zeichnung näher erläutert wird. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Außerdem können dazu geeignete Merkmale des Ausführungsbeispiels auch explizit isoliert betrachtet und mit einem beliebigen der Ansprüche kombiniert werden.

Die einzige Figur zeigt schematisch eine Gießwalzverbundanlage 2 zur Herstellung von dünnem Endlosmetallband.

Die Gießwalzverbundanlage 2 umfasst eine Gießmaschine 4, eine erste Walzstraße 6 sowie eine zweite Walzstraße 8. Bei der ersten Walzstraße 6 handelt es sich um eine Grobwalzstraße mit drei Walzgerüsten 10 und bei der zweiten Walzstraße 8 handelt es sich um eine Fertigwalzstraße mit fünf Walzgerüsten 10, wobei die jeweilige Walzstraße 6, 8 grundsätzlich eine andere Anzahl von Walzgerüsten 10 aufweisen kann.

Des Weiteren umfasst die Gießwalzverbundanlage 2 eine Regeleinrichtung 12 mit einer Messeinheit 14 und einem mit der Messeinheit 14 verbundenen Regler 16. Die Messeinheit 14 umfasst mehrere Messgeräte 18 zum Erfassen unterschiedlicher Walzprodukteigenschaften. Bei dem jeweiligen Messgerät 18 kann es sich insbesondere um ein berührungslos messendes Messgerät handeln.

Außerdem weist die Gießwalzverbundanlage 2 eine mit dem Regler 16 verbundene Bedieneinheit 20 und eine zwischen den beiden Walzstraßen 6, 8 angeordnete induktive Heizeinrichtung 22 auf. Ferner ist die Gießwalzverbundanlage 2 mit einer Kühleinrichtung 24, beispielsweise einer Laminar-Kühlstrecke, sowie einer Aufwickeleinrichtung 26 ausgestattet.

Die Gießmaschine 4 der Gießwalzverbundanlage 2 ist eine Stranggießmaschine und umfasst einen Pfannendrehturm 28, in den zwei Gießpfannen 30 einsetzbar sind, sowie eine Kokille 32. Die Kokille 32 der Gießmaschine 4 verfügt über eine Primärkühleinrichtung, zwei Schmalseitenplatten, deren Abstand zueinander verstellbar ist, sowie zwei Breitseitenplatten, wobei die Platten der Kokille 32 sowie die Primärkühleinrichtung einer besseren Übersichtlichkeit halber figürlich nicht dargestellt sind.

Darüber hinaus umfasst die Gießmaschine 4 einen Verteiler 34 zum Aufnehmen einer Metallschmelze aus den Gießpfannen 30 und zum Weiterleiten der Metallschmelze zu der Kokille 32. Weiterhin verfügt die Gießmaschine 4 über ein Führungssystem 36 mit mehreren Führungsrollen sowie einer Sekundärkühleinrichtung, wobei die Führungsrollen und die Sekundärkühleinrichtung einer besseren Übersichtlichkeit halber figürlich nicht dargestellt sind. Außerdem weist die Gießmaschine 4 einen Stopfen 38 auf, mittels welchem ein Zufluss der Metallschmelze zu der Kokille 32 steuerbar ist.

Der Regler 16 ist mit der Gießmaschine 4, insbesondere mit der Kokille 32, dem Führungssystem 36 und dem Stopfen 38 der Gießmaschine 4, verbunden. Weiterhin kann der Regler 16 eine Kühlleistung bzw. eine Kühlleistungsverteilung der Sekundärkühleinrichtung, eine Kühlleistung bzw. eine Kühlleistungsverteilung der Primärkühleinrichtung, eine Stellung des Stopfens 38 sowie den Abstand der Schmalseitenplatten der Kokille 32 steuern.

Mithilfe der Gießmaschine 4 wird aus der Metallschmelze ein Gießprodukt erzeugt. Im vorliegenden Beispiel handelt es sich bei dem Gießprodukt um einen Metallstrang. Da der Herstellungsprozess des Gießproduktes dem Fachmann grundsätzlich bekannt ist, wird auf den Herstellungsprozess des Gießprodukts nicht näher eingegangen.

Mithilfe der beiden Walzstraßen 6, 8 wird aus dem Gießprodukt ein Walzprodukt, im vorliegenden Ausführungsbeispiel ein Metallband, erzeugt.

Das aus der Gießmaschine 4 austretende Gießprodukt wird zunächst der ersten Walzstraße 6, also der Grobwalzstraße, zugeführt. Mittels der ersten Walzstraße 6 wird aus dem Gießprodukt ein Grobwalzprodukt erzeugt, wobei das Gießprodukt in der ersten Walzstraße 6 einen Warmwalzprozess unterzogen wird.

Das aus der ersten Walzstraße 6 austretende Grobwalzprodukt wird der zweiten Walzstraße 8, also der Fertigwalzstraße, zugeführt. Gegebenenfalls wird das Grobwalzprodukt zuvor mithilfe der Heizeinrichtung 22 aufgeheizt, um eine Temperatur des Grobwalzprodukts oberhalb seiner Rekristallisationstemperatur zu halten. Mittels der zweiten Walzstraße 8 wird aus dem Grobwalzprodukt ein Fertigwalzprodukt erzeugt, wobei das Grobwalzprodukt in der zweiten Walzstraße 8 einem Warmwalzprozess unterzogen wird.

Von der Messeinheit 14 werden eine oder mehrere Walzprodukteigenschaften des Fertigwalzprodukts, wie zum Beispiel dessen Breite, dessen Planheit, dessen Dickenprofil über die Breite, dessen Temperaturprofil über die Breite und/oder eine oder mehrere Oberflächeneigenschaften des Fertigwalzprodukts, erfasst. Alternativ oder zusätzlich könnten von der Messeinheit 14 eine oder mehrere Walzprodukteigenschaften des Grobwalzprodukts erfasst werden. Das heißt, die jeweilige Walzprodukteigenschaft kann, bezogen auf eine Laufrichtung 40 des Walzprodukts in der Gießwalzverbundanlage 2, hinter der zweiten Walzstraße 8 oder zwischen den beiden Walzstraßen 6, 8 erfasst werden.

Zu jeder erfassten Walzprodukteigenschaft erzeugt die Messeinheit 14 ein von der jeweiligen erfassten Walzprodukteigenschaft abhängiges Messsignal und übermittelt dieses an den Regler 16.

Vom Regler 16 werden anhand eines Regelalgorithmus unter Verwendung des Messsignals bzw. der Messsignale ein oder mehrere Steuersignale zum Einstellen eines oder mehrere Gießparameter erzeugt. Das jeweilige Steuersignal wird vom Regler 16 an die Gießmaschine 4 übermittelt.

Das jeweilige vom Regler 16 erzeugte Steuersignal ist von einer Abweichung zwischen einem Sollwert der jeweiligen Walzprodukteigenschaft und deren Istwert abhängig, wobei der Sollwert der jeweiligen Walzprodukteigenschaft dem Regler 16 über die Bedieneinheit 20 vorgegeben wird und der Istwert der jeweiligen Walzprodukteigenschaft vom Regler 16 unter Verwendung des zugehörigen Messsignals ermittelt wird.

Von der Gießmaschine 4 werden unter Verwendung des Steuersignals bzw. der Steuersignale ein oder mehrere Gießparameter, wie zum Beispiel eine Gießbreite, eine Gießgeschwindigkeit, die Kühlleistung bzw. Kühlleistungsverteilung der Primärkühleinrichtung und/oder die Kühlleistung bzw. Kühlleistungsverteilung der Sekundärkühleinrichtung, derart eingestellt, dass der Istwert der jeweiligen Walzprodukteigenschaft ihrem Sollwert angenähert wird.

Das aus der zweiten Walzstraße 8 austretende Fertigwalzprodukt wird mithilfe der Kühleinrichtung 24 gekühlt und von der Aufwickeleinrichtung 26 aufgewickelt.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können hieraus abgeleitet werden, ohne den Schutzumfang der Erfindung zu verlassen.

### Bezugszeichenliste

- 2: Gießwalzverbundanlage
- 4: Gießmaschine
- 6: Walzstraße
- 8: Walzstraße
- 10: Walzgerüst
- 12: Regeleinrichtung
- 14: Messeinheit
- 16: Regler
- 18: Messgerät
- 20: Bedieneinheit
- 22: Heizeinrichtung
- 24: Kühleinrichtung
- 26: Aufwickeleinrichtung
- 28: Pfannendrehturm
- 30: Gießpfanne
- 32: Kokille
- 34: Verteiler
- 36: Führungssystem
- 38: Stopfen
- 40: Laufrichtung

## Patentansprüche

1. Verfahren zum Betreiben einer Gießwalzverbundanlage (2), bei dem
- mithilfe einer Gießmaschine (4) der Gießwalzverbundanlage (2) ein Gießprodukt erzeugt wird und
- mithilfe einer Walzstraße (6, 8) der Gießwalzverbundanlage (2) aus dem Gießprodukt ein Walzprodukt erzeugt wird, wobei
- die Gießwalzverbundanlage (2) eine Regeleinrichtung (12) mit einer Messeinheit (14) sowie einem Regler (16) aufweist und
- von der Messeinheit (14) eine Walzprodukteigenschaft erfasst, ein von der Walzprodukteigenschaft abhängiges Messsignal erzeugt und das Messsignal an den Regler (16) übermittelt wird,
**dadurch gekennzeichnet, dass**
- vom Regler (16) anhand eines Regelalgorithmus unter Verwendung des Messsignals ein Steuersignal für die Gießmaschine (4) erzeugt und das Steuersignal an die Gießmaschine (4) übermittelt wird und
- von der Gießmaschine (4) unter Verwendung des Steuersignals ein Gießparameter eingestellt wird.

2. Verfahren nach Anspruch 1,
**dadurch gekennzeichnet, dass** das mithilfe der Gießmaschine (4) erzeugte Gießprodukt ein Metallstrang, insbesondere ein Stahlstrang, ist.

3. Verfahren nach Anspruch 1 oder 2,
**dadurch gekennzeichnet, dass** das mithilfe der Walzstraße (6, 8) erzeugte Walzprodukt ein Metallband, insbesondere eine Stahlband, ist.

4. Verfahren nach einem der vorhergehenden Ansprüche,
**dadurch gekennzeichnet, dass** die Gießwalzverbundanlage (2) eine endlos operierende Gießwalzverbundanlage ist, wobei das von der Gießwalzverbundanlage (2) erzeugte Walzprodukt ein Endloswalzprodukt, insbesondere ein Endlosmetallband, ist.

5. Verfahren nach einem der vorhergehenden Ansprüche,
**dadurch gekennzeichnet, dass** das Walzprodukt mithilfe eines Warmwalzprozesses erzeugt wird.

6. Verfahren nach einem der vorhergehenden Ansprüche,
**dadurch gekennzeichnet, dass** der Gießparameter, der von der Gießmaschine (4) unter Verwendung des Steuersignals eingestellt wird, eine Gießbreite, eine Gießgeschwindigkeit oder ein Kühlparameter der Gießmaschine (4) ist.

7. Verfahren nach einem der vorhergehenden Ansprüche,
**dadurch gekennzeichnet, dass** die Walzprodukteigenschaft, die von der Messeinheit (14) erfasst wird, eine geometrische Eigenschaft, eine Materialeigenschaft oder eine Temperaturgröße des Walzprodukts ist.

8. Verfahren nach einem der vorhergehenden Ansprüche,
**dadurch gekennzeichnet, dass** von der Messeinheit (14) die Walzprodukteigenschaft, bezogen auf eine Laufrichtung (40) des Walzprodukts in der Gießwalzverbundanlage (2), hinter der Walzstraße (6, 8) erfasst wird.

9. Verfahren nach einem der vorhergehenden Ansprüche,
**dadurch gekennzeichnet, dass** die Walzstraße (6) eine Grobwalzstraße ist und die Gießwalzverbundanlage (2) eine weitere Walzstraße (8) aufweist, wobei die weitere Walzstraße (8) eine Fertigwalzstraße ist und von der Messeinheit (14) die Walzprodukteigenschaft zwischen den beiden Walzstraßen (6, 8) erfasst wird.

10. Verfahren nach einem der vorhergehenden Ansprüche,
**dadurch gekennzeichnet, dass** dem Regler (16) ein Sollwert der Walzprodukteigenschaft zugeführt wird und das vom Regler (16) erzeugte Steuersignal von einer Abweichung zwischen dem Sollwert der Walzprodukteigenschaft und deren Istwert abhängig ist, wobei der Istwert der Walzprodukteigenschaft vom Regler (16) unter Verwendung des Messsignals ermittelt wird.

11. Regeleinrichtung (12) für eine Gießwalzverbundanlage (2), aufweisend eine Messeinheit (14) sowie einen mit einer Gießmaschine (4) verbindbaren Regler (16), wobei die Messeinheit (14) dazu eingerichtet ist, eine Walzprodukteigenschaft zu erfassen, ein von der Walzprodukteigenschaft abhängiges Messsignal zu erzeugen und das Messsignal an den Regler (16) zu übermitteln,
**dadurch gekennzeichnet, dass** der Regler (16) dazu eingerichtet ist, anhand eines Regelalgorithmus unter Verwendung des Messsignals ein Steuersignal für die Gießmaschine (4) zu erzeugen.

12. Gießwalzverbundanlage (2) mit einer Gießmaschine (4) zum Erzeugen eines Gießprodukts und einer Walzstraße (6, 8) zum Erzeugen eines Walzprodukts aus dem Gießprodukt, **gekennzeichnet durch** eine Regeleinrichtung (12) nach Anspruch 11, deren Regler (16) mit der Gießmaschine (4) verbunden ist, wobei die Gießmaschine (4) dazu eingerichtet ist, unter Verwendung des von dem Regler (16) bereitgestellten Steuersignals einen Gießparameter einzustellen.

13. Gießwalzverbundanlage (2) nach Anspruch 12, **gekennzeichnet durch** eine mit dem Regler (16) verbundene Bedieneinheit (20), mittels welcher dem Regler (16) ein Sollwert der Walzprodukteigenschaft vorgebbar ist.
